# EUROPEAN PATENT SPECIFICATION

(11) **EP 0 470 760 B1**
(45) Date of publication and mention of the grant of the patent: **14.05.1997**
(21) Application number: 91307049.6
(22) Date of filing: 31.07.1991
(51) Int. Cl.: B32B 27/08

(54) **Composite plastics film or sheet**
Verbundfilm oder Verbundblatt aus Kunststoff
Film ou feuille composite en plastique

(30) Priority: 09.08.1990 GB 9017500; 17.08.1990 GB 9018056
(43) Date of publication of application: 12.02.1992
(73) Proprietor: BXL Plastics Limited, HEMEL HEMPSTEAD, Herts HP2 4UL (GB)
(72) Inventor: Leese, Leonard, Manningtree, Essex CO11 1GG (GB); Yadav, Vijay, Pineville, North Carolina 28134 (US)
(74) Representative: Krishnan, Suryanarayana Kalyana

(56) References cited:
- EP-A- 0 127 252
- EP-A- 0 137 454
- EP-A- 0 216 343
- EP-A- 0 321 843

## Description

This invention relates to a composite plastics film or sheet having an external printable surface for use as a synthetic paper or for coating to produce a synthetic paper and to a method for its production.

The term "synthetic paper" is used herein to mean plastics film and sheet products having a feel and printability similar to cellulose paper.

Synthetic papers have been produced commercially by the Plastics Industry for many years and have taken a number of different forms. These have included products having voided (ie multicellular) or unvoided structures, some of which have been coated with filler-and/or pigment- containing surface coatings to improve printing qualities.

Descriptions of plastics compositions and methods for producing synthetic papers can be found in our GB-A-1470372, GB-A-1492771 and GB-A-1490512. Further, a description of particularly advantageous coatings can be found in our GB-A-2177413.

Each of the above-mentioned voided and unvoided structure types has its own advantages. In particular, the voided structure generally has an inherent resilience rendering it particularly suitable for certain types of printing whereas unvoided material lends itself more readily to heat-sealing due to absence of cell collapse and attendant distortion which can otherwise occur.

A disadvantage of voided structures of the type produced by stretching a two-phase system, whereby the voids are induced, and where some of the voids extend through the surface, is that the void-inducing particles of the second phase, whether they be organic or inorganic, give rise to a surface dust which can contaminate production equipment and printing machinery. This is highly undesirable. Further, the nature of plastics compositions useful in the production of such structures can also give rise to undesirable deposits on processing equipment. In particular, extrusion die lips can become encrusted with a deposit and calendering or conditioning rollers can become coated with a type of deposit commonly referred to as plate-out and such deposits interfere with satisfactory continuous operation.

Contamination of printing machinery may be overcome by washing or coating the stretched product prior to printing but even in cases where these measures are satisfactory, they add to the overall cost of the end product and do not overcome the up-stream problems.

It has been proposed in GB-A-2099754 to coextrude a stretch-voidable substrate with surface layers having a lower filler content, stretching the composite monoaxially then melt-laminating a plastics layer to one surface and stretching the composite in a direction at right angles to the first direction in order to achieve a paper-like product without the above-mentioned dust and die contamination problems.

It has also been proposed in US-A-4582753 and US-A-4702954 to produce a polymer laminate by coextruding a stretch-voidable substrate with a water vapour barrier layer and optionally a transparent and/or pigmented skin layer and then stretching the product biaxially. While the stretch-voidable substrate may be located between barrier and/or skin layers a barrier layer is always attached to a substrate layer either directly or via a conventional adhesive resin and comprises a polymeric composition having water vapour absorbent capability with or without the aid of a hygroscopic additive.

US-A-4377616 proposes the production of an opaque biaxially oriented polymer film structure of lustrous satin appearance comprising a stretch-voided core layer and void-free transparent skin layers. The stretched composite which may be produced from an initial coextrudate is said to be suited for food packaging (due to low water vapour and oxygen transmission characteristics) and as decorative wrapping material.

The prior art discussed above seeks to overcome the problems which may be associated with the manufacture of synthetic paper comprising a stretch voided structure in a complex way albeit involving coextrusion but also sequential biaxial stretching and lamination. Whereas the production of packaging materials comprising internal stretch voided structures are otherwise proposed, these incorporate specific water vapour barrier layers or external transparent layers consistent with their intended application.

Additional prior art includes GB-A-2224973, GB-A-2177049, EP-A-258020, US-A-4701370, US-A-4663216, US-A-4632869 and US-A-4438175. In so far as the disclosures of these references relate to stretched coextruded composite structures comprising a voided substrate to which is attached a non-voided skin or outer layer, they are directed towards products wherein the skin layer is either free of pigment or filler, or the content of such is low. Otherwise, in this context, the disclosures are general and do not give any indication of the amounts of pigments or fillers used for skin layers in any of the examples where such are incorporated. Accordingly, the die crust problems associated with high filler contents are avoided in these references which infer minimising the incorporation of fillers and/or pigments in the outer layers of such coextrudates.

We have found that a composite plastics film or sheet for use as a synthetic paper can be produced by initial coextrusion of a core layer and outer layers, without a significant die crust problem associated with an outer layer to provide an external printable surface if that outer-layer comprises three or more thermoplastics polymeric materials of which one is a rubbery polymer and at least a further two of which have at least a degree of mutual incompatibility.

The above-mentioned combination of three or more thermoplastics materials permits high proportions of filler and/or pigment to be incorporated while minimising die deposits and the rubbery polymer additionally increases the cohesive strength of the external surface and its adhesive bond directly or indirectly to the core layer, whether or not filler and/or pigment is incorporated.

Accordingly, the present invention is a composite film or sheet for use as synthetic paper comprising three coextruded layers including a core layer situated between two outer layers, the core layer having been stretch-voided, characterised in that at least one of the outer layers provides an external printable surface, optionally after further treatment, and comprises at least three thermoplastics polymeric materials of which one is a rubbery polymer and at least a further two of the materials have at least a degree of mutual incompatibility, said external surface being substantially free of particle-induced open voids.

Also provided by the present invention is a method for producing such a composite plastics film or sheet.

The layers may be coextruded using coextrusion equipment known in the plastics industry which may comprise one extruder for each plastics composition employed and is adapted to feed a coextrusion die fitted for example with appropriate flow distribution control or to feed a conventional die via an appropriate distributor block.

The core layer may comprise any stretch-voidable composition but is preferably a composition such as is described in our published GB-A-1470372 and GB-A-1492771. More preferably, the composition of the core material comprises a blend of an orientable thermoplastics olefin polymer with at least one metal resinate which is 2 to 50% by weight calculated on this blend and is at least partially incompatible with the olefin polymer. The metal resinate preferably forms, at least in part, a separate phase uniformly distributed within the olefin polymer and the total composition is capable of being extruded to form a layer and stretched to produce a voided structure. Most preferably, the composition of the core comprises a blend, within the aforementioned range, of a high density polyethylene and a calcium-zinc resinate. In a preferred embodiment of this invention the composition of the core layer is selected from:-

| | Parts by weight |
|---|---|
| High density polyethylene (copolymer) | 100 |
| Calcium-zinc resinate | 5-15 |
| Polystyrene | 4.5-5.5 |
| High density polyethylene (homopolymer) | 17.5-21 |
| Calcium carbonate filler | 15-25 |
| Titanium dioxide | 5-10 |
| Styrene-butadiene copolymer | 0-1.0 |
| Calcium Oxide | 0.4-1.0 |

The above compositions may contain other additives such as an antioxidant and a lubricant. While an antistatic agent may be incorporated, we have found it preferable to incorporate such an agent in the compositions of one or more of the outer layers and/or in coatings when antistatic properties are required.

The term high density polyethylene is meant to include, unless otherwise indicated, polymers and copolymers of ethylene with minor amounts of other alpha-olefin monomers as is commonly understood in the industry and as described in the above-mentioned British patent specifications. The term includes mixtures of high density polyethylenes.

As indicated above the composition of the core layer may include additives additional to the stretch-voidable components examples of such additives are more generally discussed in our British Patent Specifications 1470372 and 1492771. It is preferred that voids in the core layer are produced solely by stretch-voiding.

The outer layers of the coextrudate and which each comprise thermoplastics material may be comprised of the same composition. This permits the use of a single extruder for the composition and simple coextrusion die with an internal or ancilliary distributor for example. At least one of the outer layers should comprise an extrudable thermoplastics composition, which can be extrusion-bonded, with or without intermediate bonding or other layers, to the core layer and stretched at about the temperature at which the core layer is stretch-voided, and comprises at least two thermoplastics polymeric materials having at least a degree of mutual incompatibility and a thermoplastics rubbery polymer. The composition and stretching should be such that substantially no particle-induced stretch-voiding occurs to form any open voids on the intended external printable surface of this layer. The outer layer so produced is preferably translucent or opaque and can be further treated, if necessary, to improve printability of this surface. It is preferred, however, that the base thermoplastics material of at least one outer layer, preferably both outer layers, which is destined to provide an external printable surface is not water-vapour absorbent and that the composition does not contain a particulate or microfibrous hygroscopic solid, especially polymeric, additive which renders the layer water-vapour absorbent. It is preferred also that any layer intermediate this layer and the core layer fulfils this preferred requirement. In this way a degree of product stability can be achieved.

By "an external printable surface" we mean a surface textured or modified as by virtue, for example, of the presence of pigment and/or filler and/or incompatible polymer or resin and/or by the influence of a sub-surface and having a printability corresponding to a wettability of at least 40 dynes/cm.

It will be appreciated that when the composition of the outer layer destined to provide an external printable surface is non-polar or insufficiently polar to inherently provide the required printability, the surface of the outer layer may be subjected to a corona discharge treatment, flame treatment or chemical treatment such as chemical oxidation treatment, for example, to render it wettable to the required degree. Such treatments are well known and it is deemed unnecessary to describe them here.

The thermoplastics materials on which the compositions of the outer layers are principally based are preferably at least similar to the thermoplastics material which predominates in the core layer composition whereby suitable extrusion temperatures and stretching temperatures do not seriously conflict. In such a case direct melt bonding between adjacent layers as they come together can be achieved thereby obviating the need for any intermediate bonding layers or the so called tie layers. Further, if at least the major polymer components in the core and outer layers are similar, it can improve the process economics by allowing reworking of reclaimed scrap material, eg the sheet edge trims into, eg the core layer composition.

In particular, when the core layer is based on high density polyethylene for example, at least one of the outer layers, and particularly that destined to provide an external printable surface, is preferably principally based on high density polyethylene also. The effect of stretch-orientation on the physical properties of a thermoplastics layer can be to increase stiffness and tensile modulus which is especially valuable to improve handling where the product is to be sheeted and then printed. Such properties can be improved if a mixture of two or more thermoplastics resins is employed whereby the surface characteristics of a layer may be modified when the layer is stretched, especially if the resin components have a degree of mutual incompatibility.

In accordance with this invention, at least one of the outer layers destined to provide an external printable surface comprises a mixture of two or more thermoplastics resins, including at least two having at least a degree of mutual incompatibility, and a thermoplastics rubbery polymer. It is believed that the rubbery polymer serves to control the bond strength between the resins, to assist in substantially preventing particle-induced stretch-voiding and formation of open voids at least on the intended external printable surface of the layer, to improve surface strength and to improve interlayer bonding, particularly of the outer layer to the core layer. Importantly, the mixture of resins and rubber polymer of this outer layer aids processing and minimises die deposits, particularly for filled and/or pigmented materials. It should be appreciated that the resins and the thermoplastics rubbery polymer, in this immediate context, should be such that there is a temperature at which they are all molten, or at least soft, and can be blended together.

Thus, the latter layers may comprise a mixture of 100 parts of base resin comprising high density polyethylene or a propylene (co)polymer, from 5 to 100 parts by weight of a styrene polymer and from 0.5 to 20 parts of a rubbery polymer (preferably 1 to 10 parts) consistent with the preferred embodiment described in our GB-A-1490512 including the modifications described therein.

We have found that blends of two or more of high density polyethylene, linear low density polyethylene, a propylene (co)polymer and polystyrene, two of which have at least a degree of mutual incompatibility, together with a rubbery polymer are particularly advantageous.

As examples of thermoplastics rubbery polymers there can be mentioned a copolymer of butadiene and styrene having a budadiene content of from 70% to 90% by weight; Duradene (Registered Trade Mark) supplied by ISR Ltd which is a 75:25 butadiene:styrene copolymer; Solprene (Registered Trade Mark) 1205 supplied by Phillips Petroleum Ltd which is a 75:25 butadiene:styrene block copolymer; Cariflex TR1102 which is a styrene:butadiene:styrene block copolymer. Also there can be mentioned a copolymer of isobutylene and isoprene. Butyl 402 rubber supplied by Polymer Corporation Ltd is a 97.3:2.7 isobutylene:isoprene copolymer. EPDM rubbers comprising ethylene propylene diene terpolymers can also be mentioned and clearly any equivalents of the aforementioned proprietary rubbers are deemed to be mentioned by inference.

The amount of thermoplastics rubbery polymer to be employed in the composition of an outer layer destined to provide an external printable surface is advantageously in the range 0.5 to 20, preferably 1 to 10 parts by weight based on 100 parts by weight of the principal thermoplastics polymer component.

The outer layer suitably contains an amount of antistatic agent effective in reducing the static decay half-life of the composite after ageing for one day to no more than 60 seconds.

In a preferred embodiment of this invention and subject to the minimum requirements thereof, the composition for the layer destined to provide an external printable surface and which is an opaque layer is selected from:-

| | Parts by weight |
|---|---|
| High density polyethylene copolymer | 100 |
| Linear low density polyethylene | 0-43 |
| Low density polyethylene | 3-11 |
| Polystyrene | 0-25 |
| Styrene butadiene copolymer | 0-4 |
| Polypropylene/propylene copolymer | 0-16 |
| Pigment/filler | 22-50 |
| High density polyethylene homopolymer | 3-24 |

However, to obtain a translucent outer layer destined to provide an external printable surface, the composition may be selected from:-

| | Parts by weight |
|---|---|
| High density polyethylene copolymer | 100 |
| Filler/pigment | 0-38 |
| Low density polyethylene | 0-3.2 |
| Polystyrene | 0-40 |
| Styrene butadiene copolymer | 0-8 |
| Polypropylene/propylene copolymer | 0-14 |
| Ethylene vinyl acetate copolymer | 0-6 |
| High density polyethylene homopolymer | 0-20 |

The above compositions may also include other additives such as a lubricant (0-0.4 parts by wt), eg a wax, stearic acid or a metal stearate, especially calcium stearate; and an antistatic agent (0-2, preferably 0.5-1.5 parts by wt based on 100 parts of the principal polymer component of the composition comprising each outer layer) of the ethoxylated amine type.

It has been found that the presence of fillers and/or pigments in the outer layer(s) can provide a better grip during stretching of the co-extruded layers.

In particular when the stretching process employs a flat-bed stretcher with edge grippers, the pigment/filler content is preferably in the range 10 - 30%, especially 15 - 25% by weight ofthe composition.

The thickness of the outer layers in relation to the core layer is preferably such that at least one layer destined to provide an external printable surface derives such surface at least in part from the stretch-voided core layer. Accordingly, the thickness of such outer layer is suitably no more than 25%, preferably no more than 10% of the thickness of the core layer. The thickness of the other outer layer is preferably the same to achieve a balanced product.

The stretching of the coextruded layers may be uniaxial or biaxial according to known methods. Simultaneous biaxial stretching is preferred and this may be effected eg by co-extruding the layers in the form of a tube and inflating it in known manner. However, to achieve a flat laying product, the layers are preferably coextruded to form a continuous sheet or web which is then stretched employing a flat-bed stretching apparatus preferably of the type described in our published GB-A-1374574 and GB-A-1442113. Stretching of thermoplastic webs using such apparatus is described in our published GB-A-1490512. Webs stretched from compositions comprising 100 parts by wt of a high density polyethylene and/or polypropylene and 0-100 parts by wt of polystyrene are most preferred.

It is preferred that the stretching of the coextruded layers is carried out at a temperature within the normal orientation temperature range of the principal thermoplastics polymer on which the core layer is based. The temperature of stretching is also preferably within the normal orientation temperature range of the principal thermoplastics polymer on which the outer layer destined to provide an external printable surface is based.

As defined in the aforementioned GB-A-1470372 and GB-A-1492771, by "normal orientation temperature range" there is meant that range of temperatures well known to those skilled in the art, bounded at the lower end by the minimum temperature at which uniaxial stretching of the thermoplastics material can be effected at a commercially acceptable rate and at the upper end by the maximum temperature at which stretching of the thermoplastics material can be effected to achieve a significantly oriented product.

The temperature of stretching the coextruded layers is further preferably selected from:
a) temperature below the melting point or softening point of the void inducing component of the core layer when said component is a non-polymeric organic compound, a metal salt of an organic acid, a metal resinate or a modified or unmodified rosin ester;
b) temperature below the glass transition temperature of the void inducing component of the core layer when said component is a polymer
such that voids are formed in the core layer.

The composite plastics film or sheet produced according to this invention may be subjected to various treatments and surface coating for example to enhance antistatic and printing qualities. It will be understood however, that the outer layer destined to provide an external printable surface when based on polyolefins for example, will usually be subjected to surface treatment such as oxidation via flame or corona discharge treatment to provide a more polar surface and the required wettability to more readily accept inks and coatings. Clearly, such treatments may be applied to the surface of the other outer surface if desired.

Coatings that may be applied to the composite film or sheet include aqueous coatings commonly used in the paper industry and especially latex-based coatings. Of particular value in the present context however, are the coatings described in our GB-A-2177413 as herein before mentioned. It will be appreciated that adhesive coatings such as pressure sensitive and heat activatable coatings may be alternatively or additionally applied to the compsoite film and sheet products of this invention as may be desirable for particular applications.

The application of surface coatings to the composite plastics film and sheet products of this invention can improve their stiffness as well as improve antistatic and printing qualities. However, the basic sandwich type structure can provide better inherent stiffness than that of a sheet made only of similar core or outer layer material. Dust-free films and sheets of this invention have a compressible core layer which is of value in letterpress printing and protect processing machinery from unwanted deposits.

The following Examples are given to illustrate the invention but in no way limit the scope thereof.

### Example 1

The following composition was used to produce Compound 'A' (used in the production of the core material).

| | Parts by weight |
|---|---|
| Rigidex 002/55 high density polyethylene (copolymer) of MFI* 0.2 g/10 min and density 0.955 Kg/m³ (supplied by BP Chemicals Ltd (BPCL)) | 100 |
| Rigidex HD607OEA high density polyethylene of MFI 7.5 and density 0.96 Kg/m³ (supplied by BPCL) | 17.6 |
| Polystyrene Grade HF888 (supplied by BPCL) | 4.8 |
| Ennesin ZC14 (Calcium-zinc resinate) (supplied by Leon Frenkel Ltd) | 9.6 |
| Cariflex TR1102 Styrene-butadiene-styrene block copolymer (supplied by Shell UK Ltd) | 0.6 |
| Calcium Carbonate-anhydrous 2.5 micron particle size (supplied by Himont UK Ltd) | 21.0 |
| Titanium dioxide (Rutile) (RCR2 supplied by Himont UK Ltd) | 5.8 |
| Armostat 400 (antistatic agent) (supplied by AKZO Chemicals Ltd | 0.14 |
| Armostat 375D (antistatic agent) (supplied by AKZO Chemicals Ltd) | 0.35 |
| Caloxal CPA calcium oxide (supplied by Sturge Lifford Ltd) | 0.58 |

| | |
|---|---|
| *MFI = Melt Flow Index | |

| | Parts by weight |
|---|---|
| Calcium Stearate (supplied by RTZ Chemicals Ltd) | 0.04 |
| Irganox B215 antioxidant (supplied by Ciba Geigy Industries Ltd) | 0.29 |

Compound A was prepared from this composition as follows:-

Separate, melt blended, cooled and diced masterbatches were obtained from the above with the calcium carbonate and titanium dioxide respectively and comprised:-

| A1 | | A2 | |
|---|---|---|---|
| Calcium Carbonate | 60% | Titanium dioxide | 60% |
| Rigidex HD 607OEA | 39.6% | Rigidex HD 607OEA | 39.6% |
| Armostat 400 | 0.4% | Calcium Stearate | 0.4% |

Masterbatches A1 and A2 were then intermixed in appropriate proportions with the remainder of the ingredients of the composition and fed to a compounding extruder. The composition was melt blended at approximately 200° C extruded, cooled and diced to form Compound A.

The following composition was used to produce compound 'B' (used in the production of the outer layer material):-

| | Parts by weight |
|---|---|
| Rigidex 002/55 high density polyethylene (copolymer) | 100 |
| Calcium Carbonate (as for Compound A) | 29 |
| Titanium dioxide - RCR2 (as for Compound A) | 12.5 |
| Rigidex HD 6070EA high density polyethylene | 14.85 |
| Rigidex DFDG 0159 low density polyethylene (supplied by BPCL) | 6.24 |
| Polystyrene grade HF888 (as for Compound A) | 25.0 |
| Innovex - Linear low density Polyethylene grade LL0640AA (supplied by BPCL) | 12.5 |
| Cariflex TR1102 | 4.0 |
| Calcium stearate (as for compound A) | 0.06 |

| | Parts by weight |
|---|---|
| Nourymix AS024 (Antistatic masterbatch - active ingredient 40%) (supplied by AKZO Chemicals Ltd) | 4.5 |
| Armostat 400 (as for compound A) | 0.15 |

Compound 'B' was prepared from this composition as follows:-Separate, melt blended, cooled and diced masterbatches were obtained from the above with the calcium carbonate and titanium dioxide respectively and comprised:-

| B1 | | B2 | |
|---|---|---|---|
| Calcium Carbonate | 60% | Titanium Dioxide | 49.87% |
| Rigidex HD6070EA | 39.6% | Calcium Carbonate | 24.94% |
| Armostat 400 | 0.4% | Rigidex DFDG0159 | 24.94% |
| | | Calcium Stearate | 0.25% |

Masterbatches B1 and B2 were then intermixed in appropriate proportions with the remainder of the ingredients of the composition and fed to a compounding extruder. The composition was melt blended at approximately 200° C, extruded, cooled and diced to form Compound B.

Compound 'A' was fed to an in-line extruder of a twin extruder-distributor-sheeting die coextrusion arrangement and Compound 'B' fed to a secondary extruder. The sheeting die and distributor were of conventional construction enabling a three-layer coextrudate to be produced continuously comprising a layer of Compound 'B'on each side of a layer of Compound 'A'.

The extruders were arranged to enable each to form and feed a substantially homogeneous melt into the distributor which was maintained at a temperature of 210° C. The die lips were adjusted to approximately 5mm and the flow of each of the melts was adjusted to give a composite layered extrudate about 395mm wide at an extrusion rate of 360Kg/hr.

The composite extrudate was then fed directly onto and around a set of cooling and conditioning rollers running at a peripheral speed whereby the core material was brought to a temperature of approximately 122°C and the outer layers each to a temperature of approximately 118°C and a conditioned composite extrudate produced having an overall thickness of 1.5mm, a core thickness of 1.32mm and substantially equally thick outer layers each being 0.09mm.

The thus conditioned composite extrudate was then fed into a simultaneous biaxial stretching apparatus of the type described in our GB-A-1442113 with reference to Figures 1 to 9 of that reference and arranged to provide a 4:1 stretch in each of the longitudinal or machine direction (MD) and transverse direction (TD).

The stretching apparatus was provided with a four zone circulating air oven the zones comprising Preheat zone 1, Preheat zone 2, Stretching zone 3 and Annealing zone 4. The temperatures of the zones, lengths of the zones and sheet speeds were as follows:-

| | | Temp | Length Metres | Speed in Metres/Min | Speed out Metres/Min |
|---|---|---|---|---|---|
| Preheat | zone 1 | 139 °C | 1.0 | 10.4 | - |
| Preheat | zone 2 | 138 °C | 1.0 | - | - |
| Stretching | zone 3 | 130 °C | 1.5 | - | 43.8 |
| Annealing | zone 4 | 115 °C | 2.0 | 43.8 | 43.8 |

The web gripping devices which were initially at a pitch of about 38 mm, were heated to approximately 120°C prior to contacting the sheet.

The composite plastics film thus produced and having an average thickness of 0.094 mm and nominal substance of 75 gsm was cooled, edge trimmed and passed through a corona discharge treatment unit adjusted to give a treatment level such that the wettability of the surface of each outer layer was greater than 40 dynes/cm and then reeled.

The wettability of the product was determined by the application of Sherman Surface Tension Ink 45 dynes cm⁻¹, formulated to demonstrate a wettability of at least 45 dynes/cm.

The production equipment remained clear of undesirable deposits and the product was dust free.

The physical properties of the product were as follows:

| | LHS | | RHS | |
|---|---|---|---|---|
| | MD | TD | MD | TD |
| Tensile strength (Nmm⁻²) | 43.75 | 38.02 | 41.02 | 37.76 |
| % elongation at break | 238 | 277 | 241 | 293 |
| Trouser tear Strength (Nmm⁻¹) | 134.81 | 161.26 | 110.52 | 135.8 |
| Surface cohesive strength, N Face A, Face B | 7.7 | | 7.9 | |
| Stiffness BSTM 2782 (Kg m⁻¹) | 2.58 | 3.11 | 2.50 | 3.0 |
| Static Decay After 1 day (½ life seconds) Face A, Face B | 4.5 | 6.3 | 10.3 | 17.4 |
| Gloss 85° Face A, Face B | 23.24 | 14.14 | 20.21 | 13.11 |

The thickness distribution of the layers in the final product was on average:
- Outer: 0.005 mm
- Core: 0.084 mm
- Outer: 0.005 mm

The product had a paper-like feel and the outer layers exhibited external printable surfaces having a paper-like appearance and excellent write-on qualities with both ballpoint pen and pencil. Further, the erasability of pencilled writing using a conventional rubber eraser was also excellent.

### Example 2

The procedure of Example 1 was repeated to produce a stretched product having the same nominal substance level of 75 gsm but with the average thickness distribution of the layers being:
- Outer: 0.006 mm
- Core: 0.082 mm
- Outer: 0.006 mm

This was achieved by increasing the speed of the secondary extruder by about 17%.

The physical properties of the product were very similar to those of Example 1 but with a noteable improvement in Static Decay values which were:-

| | LHS | | RHS | |
|---|---|---|---|---|
| | MD | TD | MD | TD |
| After 1 day ½ life (seconds) | 3.9 | 5.7 | 1.53 | 2.06 |

A comparison of the static decay profiles obtained from measurements across the webs for the products of Example 1 and Example 2 after 10 days ageing revealed a maximum decay time of 12 seconds for Example 2 material as opposed to a maximum, albeit more localised, of 65 seconds for Example 1 material.

The feel and surface qualities of the product of Example 2 were comparable with those of Example 1.

### Example 3

The procedure of Example 1 was repeated with the conditions adjusted to give an initial conditioned composite sheet extrudate of overall thickness 1.5 mm with the core material thickness being 1.32 mm and outer layers each having a thickness of 0.09 mm. The rate of extrusion was 360 Kg/hr. In addition the composition used for each of the outer layers was modified to comprise the following:-

| | Parts by weight |
|---|---|
| Rigidex 002/55 | 100 |
| Innovex (as in compound B of Ex 1) | 25 |
| Titanium dioxide (Rutile) RCR2 | 19.5 |
| Calcium Carbonate (as in Compound B of Ex 1) | 7.5 |
| Rigidex DFDG 0159 | 7.5 |
| Calcium Stearate (as in Compound B of Ex 1) | 0.075 |
| Rigidex HD 6070EA | 3 |
| Armostat 400 (antistatic active ingredient 75%) | 0.03 |
| Nourymix AS024 (antistatic active ingredient 40%) | 0.4 |
| Polystyrene HF888 | 25 |
| Cariflex TR1102 | 4 |

The A and B masterbatches and compounding procedure was otherwise as described in Example 1 and the remaining extrusion, stretching and treatment conditions were essentially as described in Example 1.

The composite plastics film thus produced had an average thickness of 0.088 mm and a nominal substance of 70 gsm.

The physical properties of the product were as follows:-

| | LHS | | RHS | |
|---|---|---|---|---|
| | MD | TD | MD | TD |
| Tensile strength (Nmm⁻²) | 45.57 | 39.8 | 46.14 | 32.63 |
| % Elongation at break | 146 | 229 | 152 | 187 |
| Trouser tear Strength (Nmm⁻¹) | 127.33 | 162.91 | 131.92 | 159.62 |
| Surface Cohesive strength, N Face A, Face B | 7.63 | 7.59 | 10.08 | 8.32 |
| Stiffness (BSTM 2782) (Kg m⁻¹) | 1.63 | 2.0 | 1.96 | 2.07 |
| Static Decay ½ life (seconds) after 1 day | > 1 min | | > 1 min | |
| Gloss 85° Face A, Face B | 37.8 | 25.5 | 33.4 | 19.7 |

The thickness distribution of the layers in the product was on average approximately:-
- Outer: 0.005 mm
- Core: 0.078 mm
- Outer: 0.005 mm

While the product had a paper-like feel and the outer surfaces exhibited good printable surface qualities having paper-like appearance and excellent write-on and erasibility qualities as described for the product of Example 1; the product was subsequently coated on both sides with a coating of the type described in our GB-A-2177413 in order to achieve a dried coated product with a nominal substance of 90 gsm.

The physical properties of the coated product were as follows:-

| | MD | TD |
|---|---|---|
| Tensile strength (Nmm⁻²) | 38.6 | 28.6 |
| % Elongation at break | 135 | 143 |
| Trouser tear Strength (Nmm⁻¹) | 130.07 | 102.08 |
| Surface Cohesive strength, N Face A, Face B | 7.66 | 8.06 |
| | (no coating pick) | |
| Stiffness (BSTM 2782) (Kg m⁻¹) | 4.65 | 4.72 |
| Static Decay ½ life after 1 day (seconds) | | |
| | 0.5 | |
| Gloss 85° Face A, Face B | 14.5 | 14.5 |

The coated product exhibited enhanced paper-like qualities including stiffness, printability and antistatic qualities making it an excellent synthetic paper product.

Microscope examination of the surfaces of the outer layers of the uncoated composite products of Examples 1 to 3 showed the surfaces to contain substantially no open voids Examination of a cross-section of each of the products showed them each to have a core of voided (multicellular) structure having on each side a void free outer layer.

### Example 4

The procedure of Example 1 was repeated with the following modifications:-

The following composition was used to produce Compound B:-

| | Parts by weight |
|---|---|
| Rigidex 002/55 | 100 |
| Appryl propylene polymer (supplied by Appryl SNC) | 13.73 |
| Rigidex HD6070EA | 6.21 |
| Rigidex DFDG 0159 | 2.93 |
| EPDM rubber | 2.80 |
| Titanium dioxide RCR2 | 15.28 |
| Calcium Carbonate | 25.36 |
| Calcium Stearate | 0.09 |
| Dispersing Agent (for CaCO₃ in EPDM rubber) | 0.25 |
| Nourymix AS024 (40% active ingredient) | 3.3 |

The masterbatches B1 and B2 were replaced by the following:-B4 and B5 equivalent respectively to A1 and A2 of Example 1 plus B6 comprising Omyalene G200 (supplied by OMYA SNC a subsidiary of Croxton and Garry Ltd) containing:-
- Calcium Carbonate: 88%
- EPDM rubber binder: 11%
- Dispersing Agent: 1%

Masterbatches B4, B5 and B6 were intermixed in appropriate proportions with the remainder of the ingredients of the above composition and fed to a compounding extruder. The composition was melt blended at approximately 200°C extruded, cooled and diced to form Example 4 Compound B.

The procedure of Example 1 was then continued with Compound A and Example 4 Compound B being fed to the in-line and secondary extruders respectively. The remaining extrusion, stretching and treatment conditions were carried out essentially as described in Example 1 with the exception that the temperatures in the four zone circulating air oven were as follows:-
- Preheat 1: 136°C
- Preheat 2: 129°C
- Stretching 3: 120°C
- Annealing 4: 112°C

A product having similar properties was obtained.

It was noted that during the extrusion of the composite extrudate in this Example no die deposit was observed as was also the case in Examples 1, 2 and 3. This was attributed to the use of the mixture of the thermoplastics resins and the rubbery polymer in the outer layers in accordance with this invention.

### Comparative Example 5

The procedure of Example 1 was repeated with modifications as follows:-

The following composition was used to produce Compound B:-

| | Parts by weight |
|---|---|
| Rigidex 002/55 | 100 |
| Appryl propylene polymer | 15.6 |
| Rigidex HD6070EA | 23.8 |
| Rigidex DFDG 0159 | 3.3 |
| Titanium Dioxide RCR2 | 17.3 |
| Calcium Carbonate | 28.7 |
| Calcium Stearate | 0.1 |
| Armostat 400 | 0.17 |
| Nourymix AS024 (40% active ingredient) | 3.8 |

The masterbatches B1 and B2 were replaced by B7, B8, and B9 equivalent respectively to B1, B2 and A2 of Example 1.

The masterbatches B7, B8 and B9 were intermixed in appropriate proportions with the remainder of the ingredients of the above composition and fed to a compounding extruder. The composition was melt blended at approximately 200°C, extruded, cooled and diced to form Comparative Example 5 Compound B.

The procedure of Example 1 was then continued with Compound A and Comparative Example 5 Compound B being fed to the in-line and secondary extruders respectively. The remaining extrusion, stretching and treatment conditions were carried out substantially as in Example 4.

While no die deposit was observed during the coextrusion, surface splitting and delamination of the outer layer from the core layer of the stretched product under test revealed bad surface cohesion and bad outer layer to core adhesion which was in clear contrast to the stretched products of Examples 1 to 4.

The test for surface cohesive strength and outer layer adhesion as applied to all the stretched uncoated products of Examples 1 to 5 was as follows:-

A 10 cm long strip of approximately 1" wide Sellotape adhesive tape was applied to the surface with light finger pressure. This was then immediately removed using a Lloyd Instruments Ltd tensometer, the crossheads diverging at a speed of 500 mm/min. The resulting test pieces were examined for 1) destruction of the surface layer by the adhesive tape and 2) delamination of the surface layer from the core layer. Where either of the above were apparent a 'bad' result was recorded, otherwise the sample was classed as 'good'.

The results may be summarised as follows:-

| EXAMPLE | 1 | 2 | 3 | 4 | 5 |
|---|---|---|---|---|---|
| SURFACE COHESION | * | * | * | * | + |
| OUTER LAYER ADHESION TO CORE LAYER | * | * | * | * | + |
| * = good + = bad | | | | | |

It will be appreciated from the above results that the rubbery polymer omitted from the Comparative Example 5 is an important component of the outer layer destined to provide an external printable surface, in order to achieve acceptable cohesive and adhesive bond strengths in composite products derived from a simple coextrusion, with avoidance of die crust problems, and a stretching operation to stretch-void a core layer.

It will also be appreciated that the products of this invention, whether or not provided with a coating, may find applications in the stationery, printing, book-binding and label industries. In the latter sense particularly, use for labels employed in the in-mould labelling of containers produced by for example, blow-moulding and/or injection moulding or thermoforming processes can have considerable advantages in providing durability and feasibility of reworking or recycling label-bearing plastics containers. In such applications the use of adhesives of known types, contact or heat activatable adhesives for example, may assist bonding where necessary, particularly when the relevant outer layer to be bonded carries a chalk or clay-type coating for example.

## Claims

1. A composite film or sheet for use as synthetic paper comprising three coextruded layers including a core layer situated between two outer layers, the core layer having been stretch-voided, characterised in that at least one of the outer layers provides an external printable surface, optionally after further treatment, and comprises at least three thermoplastics polymeric materials of which one is a rubbery polymer and at least a further two of the materials have at least a degree of mutual incompatibility, said external surface being substantially free of particle-induced open voids.

2. A composite as claimed in Claim 1 wherein the thermoplastics material on which the compositions of the outer layers are principally based are at least similar to that which predominates in the core layer.

3. A composite as claimed in Claim 2 wherein the core layer is derived from a composition comprising a blend of an orientable thermoplastics olefin polymer and from 2 to 50% by weight calculated on the blend of at least one metal resinate which at least in part comprises as separate phase uniformly distributed within the olefin polymer and which composition is extrudable to form a layer and stretchable to produce a voided structure.

4. A composite as claimed in Claim 3 wherein the core layer is derived from a composition comprising a blend of high density polyethylene and a calcium-zinc resinate.

5. A composite as claimed in any one of the preceding Claims wherein voids in the core layer are solely due to stretch-voiding.

6. A composite according to any one of the preceding Claims wherein the outer layers are bonded directly to the core layer.

7. A composite according to any one of the preceding Claims wherein at least one layer providing an external printable surface is based on a thermoplastics material that is not water-vapour absorbent and is free of particulate or microfibrous hygroscopic solid polymeric additive capable of rendering the layer water-vapour absorbent.

8. A composite according to any one of the preceding Claims wherein at least the outer layer providing an external printable surface is translucent or opaque.

9. A composite according to Claim 4 wherein at least the outer layer providing the external printable surface is based on high density polyethylene as herein before defined.

10. A composite according to any one of the preceding Claims wherein at least one of the outer layers is based on a thermoplastics composition comprising at least high density polyethylene, polystyrene and a rubbery polymer with or without linear low density polyethylene.

11. A composite according to any one of Claims 1 to 9 wherein at least one of the outer layers is based on a thermoplastics composition comprising high density polyethylene and linear low density polyethylene or a propylene (co)polymer and a rubbery polymer.

12. A composite according to any one of Claims 9, 10 or 11 wherein the high density polyethylene has a Melt Flow Index in the range 0.001 to 2.0, preferably 0.15 to 0.5 decigrams/minute.

13. A composite according to any one of the preceding Claims wherein the rubbery polymer is selected from thermoplastics copolymers of butadiene and styrene, copolymers of isobutylene and isoprene, and terpolymers of ethylene, propylene and a diene.

14. A composite according to any one of the preceding Claims wherein the amount of rubbery polymer present in the outer layer destined to provide an external printable surface is in the range of 0.5 to 20, preferably 1 to 10 parts by weight, based on 100 parts by weight of the principal thermoplastics polymer component of the outer layer.

15. A composite according to any one of the preceding Claims wherein the outer layers contain an amount of antistatic agent effective in reducing static decay half-life of the composite after ageing for one day to no more than 60 secs.

16. A composite according to Claim 15 wherein the antistatic agent is present in the outer layers at from 0.5 to 1.5 parts by weight per 100 parts of the principal polymer component of the composition comprising each outer layer.

17. A composite according to any one of the preceding Claims wherein the outer layers have a pigment/filler content in the range 10 - 30%, preferably 15 - 25% by weight, based on the weight of the composition of each outer layer.

18. A composite according to any one of the preceding Claims wherein the core layer is stretch-voided at a temperature within the normal orientation temperature range of the principal thermoplastics polymer on which the core layer is based.

19. A composite according to Claim 18 wherein the temperature of stretching is selected from:
a) temperatures below the melting point or softening point of the void inducing component of the core layer when said component is a non-polymeric organic compound, a metal salt of an organic acid, a metal resinate or a modified or unmodified rosin ester;
b) temperatures below the glass transition temperature of the void inducing component of the core layer when said component is a polymer;
such that voids are formed in the core layer.

20. A composite according to any one of the preceding Claims wherein the core layer is stretch-voided at a temperature within the normal orientation temperature range of the principal thermoplastics polymer on which the outer layer providing an external printable surface is based.

21. A composite according to any one of the preceding Claims wherein the core layer is stretch-voided by biaxial stretching.

22. A composite according to Claim 21 wherein the biaxial stretching is simulataneous biaxial stretching.

23. A composite according to any one of the preceding Claims wherein the core layer is stretch-voided by use of a flat-bed stretcher.

24. A composite according to any one of the preceding Claims wherein the core layer incorporates reworked, reclaimed scrap composite material.

25. A composite according to any one of the preceding Claims wherein the thickness of at least one layer providing an external printable surface is no more than 25% of the thickness of the core layer.

26. A composite according to any one of the preceding Claims which is corona discharge treated.

27. A composite according to any one of the preceding Claims which is further coated on at least one side.

28. A composite according to any one of the preceding Claims which composite is a synthetic paper.

29. A method for producing a composite plastics film or sheet as claimed in any one of the preceding Claims which comprises coextruding three thermoplastics layers comprising a core layer situated between two outer layers wherein
(i) the composition of the core-layer is stretch-voidable and
(ii) the composition of at least one of the outer layers comprising at least three thermoplastics polymeric materials of which one is a rubbery polymer and at least a further two of the materials have at least a degree of mutual incompatibility is stretchable at a temperature at which the core layer is stretch-voidable, stretch-voiding the core layer and stretching the outer layers to produce an external printable surface, which is substantially free of particle-induced open voids, optionally after further treatment, and optionally coating the stretched product.

30. A method as claimed in Claim 29 wherein the stretch-voiding of the core layer and stretching, of the outer layers occur simultaneously.

31. A method as claimed in Claims 29 or 30 wherein the temperature of stretching is within the normal orientation temperature range of the principal thermoplastics polymer on which the core layer is based.

32. A method as claimed in Claim 31 wherein the temperature of stretching is selected from:
a) temperatures below the melting point or softening point of the void inducing component of the core layer when said component is a non-polymeric organic compound, a metal salt of an organic acid, a metal resinate or a modified or unmodified rosin ester;
b) temperatures below the glass transition temperature of the void inducing component of the core layer when said component is a polymer;
such that voids are formed in the core layer.

33. A method as claimed in any one of Claims 29 to 32 wherein the core layer is stretch-voided at a temperature within the normal orientation temperature range of the principal thermoplastics polymer on which the outer layer destined to provide an external printable surface is based.

34. A method as claimed in any one of the Claims 29 to 33 wherein the stretch-voiding of the core layer and the stretching of the outer layers are achieved by stretching the coextrudate simultaneously biaxially in the machine and in transverse directions.

35. A method as claimed in any one of Claims 29 to 34 wherein reworked, reclaimed scrap composite material is incorporated into the composition of the core layer.

36. A composite according to any one of Claims 1 to 28 for use as an article of stationery or in printing, book binding or labelling.

37. A composite according to Claim 36 for use in the in-mould labelling of a plastics container.

## Patentansprüche

1. Verbundfolie oder Verbundblatt zur Verwendung als synthetisches Papier, umfassend drei coextrudierte Schichten, einschließlich einer Kernschicht, die zwischen zwei äußeren Schichten angeordnet ist, wobei die Kernschicht unter Ausbildung von Hohlräumen verstreckt wurde, dadurch gekennzeichnet, daß mindestens eine der äußeren Schichten, gegebenenfalls nach weiterer Behandlung, eine äußere bedruckbare Fläche bereitstellt und mindestens drei thermoplastische polymere Materialien umfaßt, von denen eines ein kautschukartiges Polymer ist und mindestens zwei weitere der Materialien mindestens einen Grad an gegenseitiger Unverträglichkeit aufweisen, wobei die äußere Oberfläche im wesentlichen keine durch Teilchen hervorgerufene offene Hohlräume aufweist.

2. Verbundmaterial nach Anspruch 1, wobei das thermoplastische Material, auf dem die Zusammensetzungen der äußeren Schichten im wesentlichen beruhen, mindestens ähnlich jenen ist, das in der Kernschicht vorherrscht.

3. Verbundmaterial nach Anspruch 2, wobei die Kernschicht von einer ein Gemisch aus einem orientierbaren thermoplastischen Olefinpolymer und 2 bis 50 Gewichtsprozent, berechnet auf das Gemisch, mindestens einem Metallresinat, umfassenden Zusammensetzung abgeleitet ist, die mindestens zum Teil eine getrennte, gleichförmig in dem Olefinpolymer verteilte Phase umfaßt, und wobei die Zusammensetzung zu einer Schicht extrudierbar und unter Ausbildung einer Hohlräume aufweisenden Struktur verstreckbar ist.

4. Verbundmaterial nach Anspruch 3, wobei die Kernschicht von einer Zusammensetzung abgeleitet ist, umfassend ein Gemisch von hochdichtem Polyethylen und einem Calcium-Zink-Resinat.

5. Verbundmaterial nach einem der vorangehenden Ansprüche, wobei die Hohlräume in der Kernschicht lediglich aufgrund des Verstreckvorgangs unter Ausbildung von Hohlräumen entstanden sind.

6. Verbundmaterial nach einem der vorangehenden Ansprüche, wobei die äußeren Schichten direkt an die Kernschicht gebunden sind.

7. Verbundmaterial nach einem der vorangehenden Ansprüche, wobei mindestens eine Schicht, die eine äußere bedruckbare Fläche bereitstellt, auf einem thermoplastischen Material beruht, das nicht wasserdampfabsorbierend ist und keine teilchenförmigen oder mikrofaserförmigen, hygroskopischen, festen, polymeren Additive aufweist, die in der Lage sind, die Schicht wasserdampfabsorbierend zu gestalten.

8. Verbundmaterial nach einem der vorangehenden Ansprüche, wobei mindestens die äußere Schicht, die eine äußere bedruckbare Oberfläche bereitstellt, durchscheinend oder opak ist.

9. Verbundmaterial nach Anspruch 4, wobei mindestens die äußere Schicht, die eine äußere bedruckbare Oberfläche bereitstellt, auf einem wie vorstehend hierin definierten, hochdichten Polyethylen beruht.

10. Verbundmaterial nach einem der vorangehenden Ansprüche, wobei mindestens eine der äußeren Schichten auf einer thermoplastischen Zusammensetzung beruht, umfassend mindestens hochdichtes Polyethylen, Polystyrol und ein kautschukartiges Polymer mit oder ohne lineares, niederdichtes Polyethylen.

11. Verbundmaterial nach einem der Ansprüche 1 bis 9, wobei mindestens eine der äußeren Schichten auf einer thermoplastischen Zusammensetzung beruht, umfassend hochdichtes Polyethylen und linear niederdichtes Polyethylen oder ein Propylen(co)polymer und ein kautschukartiges Polymer.

12. Verbundmaterial nach einem der Ansprüche 9, 10 oder 11, wobei das hochdichte Polyethylen einen Schmelzflußindex im Bereich 0,001 bis 2,0, vorzugsweise 0,15 bis 0,5, Dezigramm/Minute aufweist.

13. Verbundmaterial nach einem der vorangehenden Ansprüche, wobei das kautschukartige Polymer ausgewählt ist aus thermoplastischen Copolymeren von Butadien und Styrol, Copolymeren von Isobutylen und Isopren und Terpolymeren von Ethylen, Propylen und einem Dien.

14. Verbundmaterial nach einem der vorangehenden Ansprüche, wobei die Menge an kautschukartigem Polymer, die in der äußeren Schicht, die zur Bereitstellung einer äußeren bedruckbaren Oberfläche vorgesehen ist, vorliegt, im Bereich 0,5 bis 20, vorzugsweise 1 bis 10 Gewichtsteile, bezogen auf 100 Gewichtsteile der hauptsächlichen thermoplastischen Polymerkomponente der äußeren Schicht liegt.

15. Verbundmaterial nach einem der vorangehenden Ansprüche, wobei die äußeren Schichten eine Menge an antistatischem Mittel enthalten, die bei der Verminderung der Halbwertszeit des Abklingvorgangs der statischen Aufladung des Verbundmaterials, nach Altern für einen Tag, auf nicht mehr als 60 Sekunden wirksam ist.

16. Verbundmaterial nach Anspruch 15, wobei das antistatische Mittel in den äußeren Schichten bei 0,5 bis 1,5 Gewichtsteilen pro 100 Teile der hauptsächlichen Polymerkomponente der jede äußere Schicht umfassenden Zusammensetzung vorliegt.

17. Verbundmaterial nach einem der vorangehenden Ansprüche, wobei die äußeren Schichten einen Pigment/Füllstoff-Gehalt im Bereich 10-30%, vorzugsweise 15-25 Gewichtsprozent, bezogen auf das Gewicht der Zusammensetzung der jeweiligen äußeren Schicht, aufweisen.

18. Verbundmaterial nach einem der vorangehenden Ansprüche, wobei die Kernschicht unter Ausbildung von Hohlräumen bei einer Temperatur innerhalb des normalen Orientierungstemperaturbereichs des hauptsächlichen thermoplastischen Polymers, auf dem die Kernschicht beruht, liegt.

19. Verbundmaterial nach Anspruch 18, wobei die Temperatur des Verstreckens ausgewählt ist aus
a) Temperaturen unterhalb des Schmelzpunkts oder Erweichungspunkts der Hohlräume hervorrufenden Komponente der Kernschicht, wenn die Komponente eine nichtpolymere organische Verbindung, ein Metallsalz einer organischen Säure, ein Metallresinat oder ein modifizierter oder nichtmodifizierter Kolophoniumester ist,
b) Temperaturen unterhalb der Glasübergangstemperatur der Hohlräume hervorrufenden Komponente der Kernschicht, wenn die Komponente ein Polymer ist
und so, daß Hohlräume in der Kernschicht gebildet werden.

20. Verbundmaterial nach einem der vorangehenden Ansprüche, wobei die Kernschicht bei einer Temperatur innerhalb des normalen Orientierungstemperaturbereichs des hauptsächlichen thermoplastischen Polymers, auf dem die eine äußere bedruckbare Oberfläche bereitstellende äußere Schicht beruht, unter Ausbildung von Hohlräumen verstreckt wird.

21. Verbundmaterial nach einem der vorangehenden Ansprüche, wobei die Kernschicht durch biaxiales Verstrecken unter Ausbildung von Hohlräumen verstreckt wird.

22. Verbundmaterial nach Anspruch 21, wobei das biaxiale Verstrecken gleichzeitiges biaxiales Verstrecken ist.

23. Verbundmaterial nach einem der vorangehenden Ansprüche, wobei die Kernschicht unter Ausbildung von Hohlräumen durch Verwendung einer Flachbett-Streckvorrichtung verstreckt wird.

24. Verbundmaterial nach einem der vorangehenden Ansprüche, wobei die Kernschicht aufgearbeitetes, wiedergewonnenes, schnitzelförmiges Verbundmaterial eingearbeitet aufweist.

25. Verbundmaterial nach einem der vorangehenden Ansprüche, wobei die Dicke mindestens einer Schicht, die eine äußere bedruckbare Oberfläche bereitstellt, nicht mehr als 25% der Dicke der Kernschicht ist.

26. Verbundmaterial nach einem der vorangehenden Ansprüche, das mit Coronaentladung behandelt ist.

27. Verbundmaterial nach einem der vorangehenden Ansprüche, das außerdem auf mindestens einer Seite beschichtet ist.

28. Verbundmaterial nach einem der vorangehenden Ansprüche, wobei das Verbundmaterial ein synthetisches Papier ist.

29. Verfahren zur Herstellung einer Verbundkunststofffolie oder eines Verbundkunststoffblatts nach einem der vorangehenden Ansprüche, umfassend Coextrudieren von drei thermoplastischen Schichten, umfassend eine Kernschicht, die zwischen zwei äußeren Schichten angeordnet ist, wobei
(i) die Zusammensetzung der Kernschicht unter Ausbildung von Hohlräumen verstreckbar ist und
(ii) die Zusammensetzung mindestens einer der äußeren Schichten, die mindestens drei thermoplastische polymere Materialien umfaßt, wovon eines ein kautschukartiges Polymer ist und mindestens zwei weitere der Materialien zumindest einen Grad an gegenseitiger Unverträglichkeit aufweisen, bei einer Temperatur verstreckbar ist, bei der die Kernschicht unter Ausbildung von Hohlräumen verstreckbar ist, Verstrecken der Kernschicht unter Ausbildung von Hohlräumen und Verstrecken der äußeren Schichten unter Erzeugung einer äußeren bedruckbaren Oberfläche, die im wesentlichen frei ist von offenen von Teilchen hervorgerufenen Hohlräumen, gegebenenfalls nach weiterer Behandlung und gegebenenfalls Beschichten des verstreckten Produkts.

30. Verfahren nach Anspruch 29, wobei das Verstrecken der Kernschicht unter Ausbildung von Hohlräumen und das Verstrecken der äußeren Schichten gleichzeitig erfolgen.

31. Verfahren nach Anspruch 29 oder 30, wobei die Temperatur des Verstreckens innerhalb des normalen Orientierungstemperaturbereichs des hauptsächlichen thermoplastischen Polymers, auf dem die Kernschicht beruht, liegt.

32. Verfahren nach Anspruch 31, wobei die Temperatur des Verstreckens ausgewählt ist aus
a) Temperaturen unterhalb des Schmelzpunkts oder Erweichungspunkts der Hohlräume hervorzurufenden Komponente der Kernschicht, wenn die Komponente eine nichtpolymere organische Verbindung, ein Metallsalz einer organischen Säure, ein Metallresinat oder ein modifizierter oder nichtmodifizierter Kolophoniumester ist
b) Temperaturen unterhalb der Glasübergangstemperatur der Hohlräume hervorrufenden Komponente der Kernschicht, wenn die Komponente ein Polymer ist
und so, daß Hohlräume in der Kernschicht gebildet werden.

33. Verfahren nach einem der Ansprüche 29 bis 32, wobei die Kernschicht bei einer Temperatur innerhalb des normalen Orientierungstemperaturbereichs des hauptsächlichen thermoplastischen Polymers, auf dem die äußere Schicht, die zur Bereitstellung einer äußeren bedruckbaren Oberfläche vorgesehen ist, beruht, unter Ausbildung von Hohlräumen verstreckt wird.

34. Verfahren nach einem der Ansprüche 29 bis 33, wobei das Verstrecken der Kernschicht unter Ausbildung von Hohlräumen und das Verstrecken der äußeren Schichten durch gleichzeitiges biaxiales Verstrecken des Coextrudats in Maschinen- und in Querrichtung erreicht wird.

35. Verfahren nach einem der Ansprüche 29 bis 34, wobei wiederaufgearbeitetes, wiedergewonnenes, schnitzelförmiges Verbundmaterial in die Zusammensetzung der Kernschicht eingearbeitet wird.

36. Verbundmaterial nach einem der Ansprüche 1 bis 28 zur Verwendung als Gegenstand für Papierwaren oder beim Drucken, Buchbinden oder Etikettieren.

37. Verbundmaterial nach Anspruch 36 zur Verwendung bei der Etikettierung eines Kunststoffbehälters in der Form.

## Revendications

1. Film ou feuille composite pour emploi comme papier synthétique, comportant trois couches coextrudées incluant une couche formant noyau située entre deux couches extérieures, la couche formant noyau présentant des vides formés par étirage, caractérisé en ce qu'au moins l'une des couches extérieures donne une surface extérieure pouvant être imprimée, éventuellement après un autre traitement, et comporte au moins trois matériaux polymères thermoplastiques dont l'un est un polymère de type caoutchouc et dont au moins deux autres présentent au moins un certain degré d'incompatibilité mutuelle, ladite surface extérieure étant substantiellement exempte de vides ouverts, provoqués par des particules.

2. Composite selon la revendication 1, dans lequel les matériaux thermoplastiques sur lesquels sont principalement basées les compositions des couches extérieures sont au moins semblables au matériau qui prédomine dans la couche formant noyau.

3. Composite selon la revendication 2, dans lequel la couche formant noyau est obtenue à partir d'une composition comportant un mélange d'un polymère oléfinique thermoplastique orientable et de 2 à 5% en poids, calculé par rapport au mélange, d'au moins un résinate métallique qui, au moins en partie, comprend une phase distincte uniformément distribuée à l'intérieur du polymère oléfinique, composition qui peut s'extruder pour former une couche et peut s'étirer pour donner une structure présentant des vides.

4. Composite selon la revendication 3, dans lequel la couche formant noyau est obtenue à partir d'une composition comportant un mélange de polyéthylène haute densité et de résinate de calcium-zinc.

5. Composite selon l'une des revendications précédentes, dans lequel les vides existant dans la couche formant noyau sont uniquement dus à une formation de vides par étirage.

6. Composite selon l'une des revendications précédentes, dans lequel les couches extérieures sont directement liées à la couche formant noyau.

7. Composite selon l'une des revendications précédentes, dans lequel au moins une couche donnant une surface extérieure pouvant être imprimée est basée sur un matériau thermoplastique qui n'est pas absorbant pour la vapeur d'eau et qui est exempt d'un additif polymère solide hygroscopique, particulaire ou microfibreux, capable de provoquer l'absorption de la vapeur d'eau par la couche.

8. Composite selon l'une des revendications précédentes, dans lequel au moins la couche extérieure donnant une surface extérieure pouvant être imprimée est translucide ou opaque.

9. Composite selon la revendication 4, dans lequel la couche extérieure donnant une surface extérieure pouvant être imprimée est à base d'un polyéthylène haute densité comme défini ici ci-dessus.

10. Composite selon l'une des revendications précédentes, dans lequel au moins l'une des couches extérieures est basée sur une composition thermoplastique comportant au moins un polyéthylène haute densité, un polystyrène et un polymère de type caoutchouc avec ou sans polyéthylène linéaire basse densité.

11. Composite selon l'une des revendications 1 à 9, dans lequel au moins l'une des couches extérieures est à base d'une composition thermoplastique comportant un polyéthylène haute densité et un polyéthylène linéaire basse densité ou un (co)polymère de propylène et un polymère de type caoutchouc.

12. Composite selon l'une des revendications 9, 10 ou 11, dans lequel le polyéthylène haute densité a un indice de fusion compris entre 0,001 et 2,0, de préférence entre 0,15 et 0,5 décigrammes/minute.

13. Composite selon l'une des revendications précédentes, dans lequel on choisit le polymère de type caoutchouc parmi des copolymères thermoplastiques de butadiène et de styrène, des copolymères d'isobutylène et d'isoprène et des terpolymères d'éthylène, de propylène et d'un diène.

14. Composite selon l'une des revendications précédentes, dans lequel la proportion de polymère de type caoutchouc présent dans la couche extérieure destinée à donner une surface extérieure pouvant être imprimée est comprise entre 0,5 et 20, de préférence entre 1 et 10 parties en poids, sur la base de 100 parties en poids du composant polymère thermoplastique principal de la couche extérieure.

15. Composite selon l'une des revendications précédentes, dans lequel les couches extérieures contiennent une proportion d'agent antistatique efficace pour réduire à 60 secondes au plus la demi-vie de décroissance statique du composite après vieillissement pendant un jour.

16. Composite selon la revendication 15 dans lequel l'agent antistatique est présent dans les couches extérieures dans la proportion de 0,5 à 1,5 partie en poids pour 100 parties du composant polymère principal de la composition constituant chaque couche extérieure.

17. Composite selon l'une des revendications précédentes, dans lequel les couches extérieures ont une teneur en pigment/en charge comprise entre 10 et 30%, de préférence entre 15 et 25% en poids, basé sur le poids de la composition de chaque couche extérieure.

18. Composite selon l'une des revendications précédentes, dans lequel on forme, dans la couche formant noyau, des vides par étirage à une température située dans la gamme de la température normale d'orientation du polymère thermoplastique principal sur lequel est basée la couche formant noyau.

19. Composite selon la revendication 18, dans lequel on choisit la température d'étirage parmi:
a) des températures inférieures au point de fusion ou au point de ramollissement du composant de la couche formant noyau qui provoque les vides lorsque ledit composant est un composant organique non polymère, un sel métallique ou un acide organique, un résinate métallique ou un ester de colophane modifié ou non modifié;
b) des températures inférieures à la température de transition vitreuse du composant de la couche formant noyau provoquant les vides lorsque ledit composant est un polymère
de façon que des vides se forment dans la couche formant noyau.

20. Composite selon l'une des revendications précédentes, dans lequel on forme, dans la couche formant noyau, des vides par étirage à une température située dans la gamme de la température normale d'orientation du polymère thermoplastique principal sur lequel est basée la couche extérieure qui donne une surface extérieure pouvant être imprimée.

21. Composite selon l'une des revendications précédentes, dans lequel les vides formés par étirage dans la couche formant noyau sont obtenus par étirage biaxial.

22. Composite selon la revendication 21 dans lequel l'étirage biaxial est un étirage biaxial simultané.

23. Composite selon l'une des revendications précédentes, dans lequel on forme, dans la couche formant noyau, des vides par étirage en utilisant un banc d'étirage à lit plat.

24. Composite selon l'une des revendications précédentes, dans lequel la couche formant noyau contient un matériau composite sous forme de chutes de réemploi, après traitement.

25. Composite selon l'une des revendications précédentes, dans lequel l'épaisseur d'au moins une couche donnant une surface extérieure pouvant être imprimée n'est pas supérieure à 25% de l'épaisseur de la couche formant noyau.

26. Composite selon l'une des revendications précédentes, traité par décharge corona.

27. Composite selon l'une des revendications précédentes, revêtu en outre sur au moins une face.

28. Composite selon l'une des revendications précédentes, le composite étant un papier synthétique.

29. Procédé de production d'un film ou d'une feuille plastique composite comme revendiqué dans l'une quelconque des revendications précédentes, consistant à coextruder trois couches thermoplastiques comportant une couche formant noyau située entre deux couches extérieures, dans lequel
(i) la composition de la couche formant noyau permet dy former des vides par étirage et
(ii) la composition d'au moins l'une des couches extérieures, comportant au moins trois matériaux polymères thermoplastiques dont l'un est un polymère de type caoutchouc et dont au moins deux autres présentent au moins un certain degré d'incompatibilité mutuelle, peut s'étirer à une température à laquelle on peut, par étirage, former des vides dans la couche formant noyau,
à former des vides par étirage dans la couche formant noyau et à étirer les couches extérieures pour donner une surface extérieure qui peut être imprimée et qui est substantiellement exempte de vides ouverts provoqués par des particules, éventuellement après un autre traitement et, éventuellement, à revêtir le produit étiré.

30. Procédé selon la revendication 29, dans lequel la formation de vides par étirage dans la couche formant noyau et l'étirage des couches extérieures se font simultanément.

31. Procédé selon l'une des revendications 29 ou 30, dans lequel la température d'étirage se situe dans la gamme de la température normale d'orientation du polymère thermoplastique principal sur lequel est basée la couche formant noyau.

32. Procédé comme revendiqué dans l'une des revendications 29 ou 30, dans lequel on choisit la température d'étirage parmi:
a) des températures inférieures au point de fusion ou au point de ramollissement du composant de la couche formant noyau qui provoque les vides lorsque ledit composant est un composant organique non polymère, un sel métallique ou un acide organique, un résinate métallique ou un ester de colophane modifié ou non modifié;
b) des températures inférieures à la température de transition vitreuse du composant de la couche formant noyau provoquant les vides lorsque ledit composant est un polymère
de façon que ces vides se forment dans la couche formant noyau.

33. Procédé selon l'une des revendications 29 à 32 dans lequel on forme des vides, par étirage, dans la couche formant noyau à une température située dans la gamme de la température normale d'orientation du polymère thermoplastique principal sur lequel est basée la couche extérieure destinée à donner une surface extérieure pouvant être imprimée.

34. Procédé selon l'une des revendications 29 à 33, dans lequel la formation de vides, par étirage, dans la couche formant noyau et l'étirage des couches extérieures se font en étirant simultanément le coextrudat biaxialement sur le banc et dans des directions transversales.

35. Procédé selon l'une des revendications 29 à 34 dans lequel on incorpore dans la composition de la couche formant noyau du matériau composite constitué de chutes de réemploi, après traitement.

36. Composite selon l'une des revendications 1 à 28 pour emploi comme fourniture de bureau ou dans l'impression, la reliure des ouvrages ou l'étiquetage.

37. Composite selon la revendication 36 pour emploi dans l'étiquetage, dans le moule même, d'un conteneur en plastique.
